Europäisches Patentamt

European Patent Office

Office européen des brevets

(11) Publication number: **0 104 778**
**A2**

## EUROPEAN PATENT APPLICATION

(21) Application number: 83304963.8

(22) Date of filing: 26.08.83

(51) Int. Cl.³: **B 60 C 23/04**

(30) Priority: 27.08.82 GB 8224738

(43) Date of publication of application:
04.04.84 Bulletin 84/14

(84) Designated Contracting States:
DE FR GB IT NL SE

(71) Applicant: Braithwaite, Arthur Bevan Midley
Caldrees Manor
Ickleton Saffron Walden Essex(GB)

(72) Inventor: Braithwaite, Arthur Bevan Midley
Caldrees Manor
Ickleton Saffron Walden Essex(GB)

(74) Representative: Skone James, Robert Edmund et al,
GILL JENNINGS & EVERY 53-64 Chancery Lane
London WC2A 1HN(GB)

(54) Pressure sensor.

(57) A pressure sensor for attachment to a tyre comprises sensing means (9) exposed to the pressure of the tyre in use and movable against resilience (11) in response to changes in the tyre pressure; and transmitting means (not shown) connected to an electrical circuit. The arrangement is such that on movement of the sensing means (9) in excess of a predetermined amount an electrical current is caused to flow in the electrical circuit, the electrical current causing the transmitting means to transmit a signal.

*Fig. 5.*

EP 0 104 778 A2

Croydon Printing Company Ltd.

ARTHUR BEVAN MIDLEY
BRAITHWAITE          - 1 -     52/2019/02

## PRESSURE SENSOR

The invention relates to a pressure sensor for attachment to a tyre.

It is important, particularly in the case of commercial vehicles, for tyre pressures to be frequently checked to ensure that there has not been a significant loss in pressure, which can be dangerous and may in some cases result in destruction of the tyre. Up until now, it has therefore been necessary for frequent checks on individual tyres to be carried out which is clearly time-consuming.

In accordance with the present invention, a pressure sensor for attachment to a tyre comprises sensing means exposed to the pressure of the tyre in use and movable against resilience in response to changes in the tyre pressure; and transmitting means connected to an electrical circuit, the arrangement being such that on movement of the sensing means in excess of a predetermined amount an electrical current is caused to     : in the electrical circuit, the electrical current flow causing the transmitting means to transmit a signal.

With this sensor, the tyre pressure is constantly monitored and as soon as the pressure drops below an acceptable value, the transmitting means will transmit a suitable warning signal. Of course, the sensor could also be utilised to detect an over-pressure in the tyre.

Preferably, the sensor comprises a body which can be mounted on the valve of a tyre, the body having means for depressing the valve spindle to enable air under pressure in the tyre to communicate with a chamber within the body, a wall part of the chamber providing

- 2 -

the sensing means. This enables the sensor conveniently to be mounted to the tyre where it simply substitutes for the conventional valve protection cap.

The sensing means may comprise a diaphragm carrying a metal connector. Preferably, where the sensor is to sense a decrease in pressure, the diaphragm is resiliently urged in a direction to cause the metal connector to contact electrical contacts of the electrical circuit. The resilient urging may be provided by a compression spring the force exerted by which is adjustable. This enables the pressure at which an electrical current is caused to flow in the electrical circuit to be selected.

Alternatively, the sensor may include current generating means, such as a piezoelectric crystal, such that movement of the sensing means against resilience in excess of a predetermined amount activates the current generating means to cause a current to flow in the electrical circuit.

The transmitting means is preferably mounted in a unit which clips onto a body housing the sensing means in such a way that the transmitting means forms part of the electrical circuit. Alternatively, the transmitting means may be mounted on the wheel hub or tyre separately from the sensing means, or on a valve housing.

Preferably, the transmitting means transmits an ultrasonic signal.

In one convenient arrangement, the pressure sensor is utilised in a pressure monitoring apparatus having receiving means for receiving the transmitted signal and providing an output signal. Conveniently, the receiving means is mounted to a part of the vehicle adjacent the tyre, means being provided to guide the output signal from the receiving means to a position in the vehicle where a visual or aural warning signal may be emitted.

If such a pressure monitoring apparatus is provided for each tyre on the vehicle then each transmitting means may be arranged to transmit signals at different frequencies or with different powers to avoid a signal from one transmitting means being received by receiving means associated with another transmitting means.

An example of a pressure monitoring apparatus including a pressure sensor in accordance with the present invention will now be described with reference to the accompanying diagrammatic drawings, in which:-

Figure 1 is a cross-section through a tyre of a vehicle on which is mounted the pressure sensor;

Figure 2 is a view similar to Figure 1 but showing a modified pressure sensor;

Figure 3 illustrates in more detail the arrangement of Figure 1;

Figure 4 illustrates in more detail the arrangement of Figure 2;

Figure 5 is a section taken through a part of the pressure sensor shown in Figures 1 and 3;

Figure 6 is a section taken through another part of the pressure sensor shown in Figures 1 and 3; and

Figure 7 illustrates apparatus for receiving transmitted signals from four transmitting means.

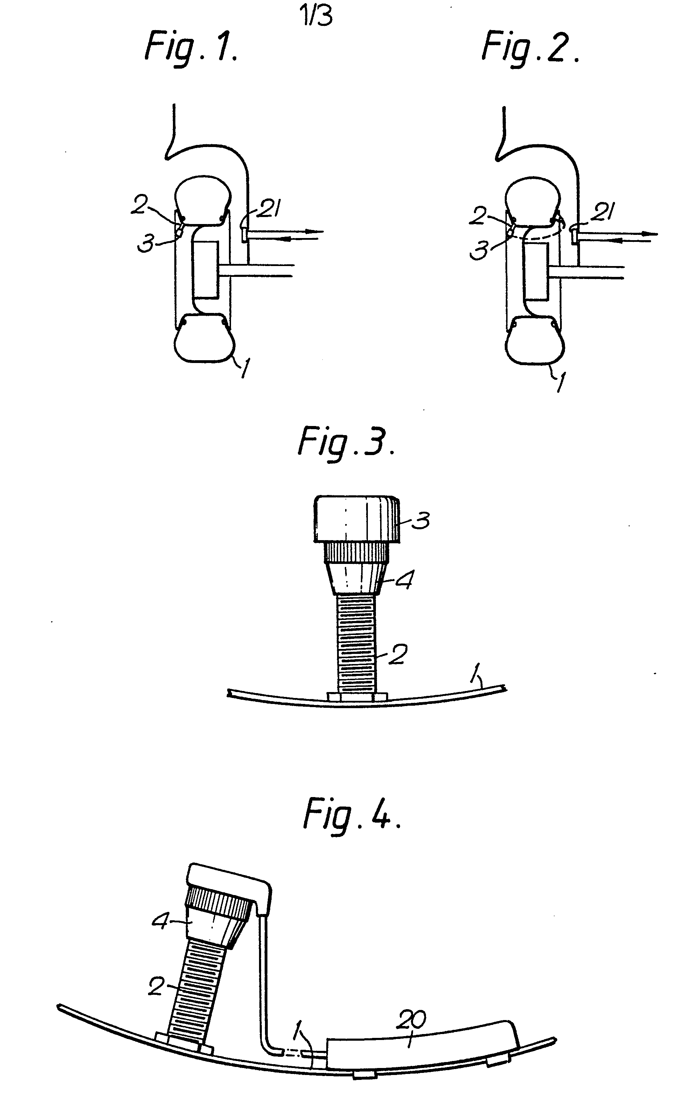

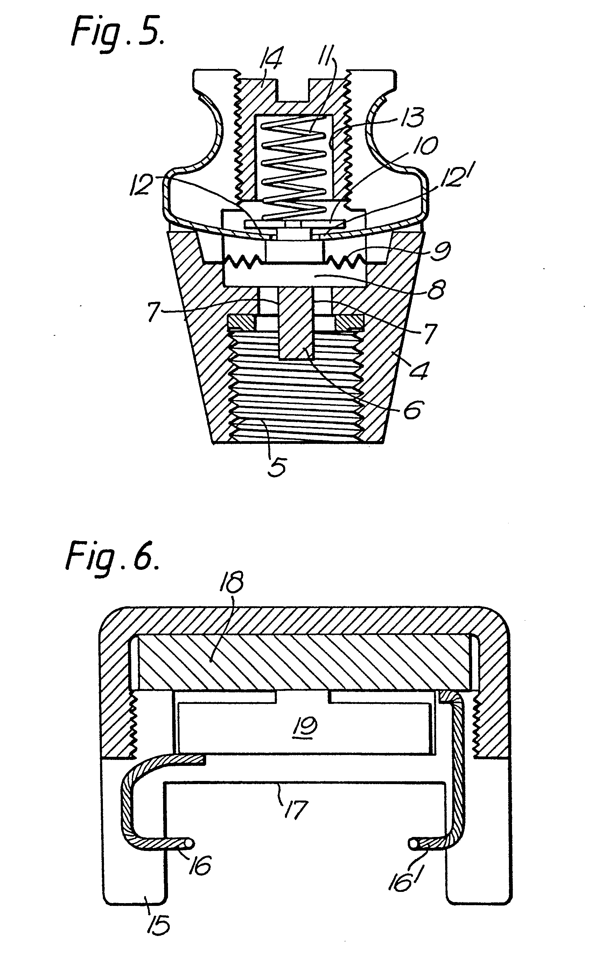

Figures 1 and 3 illustrate a vehicle tyre 1 having a Schraeder valve 2 on which is mounted a pressure sensor 3. The pressure sensor 3 is shown in more detail in Figures 5 and 6 and comprises a body 4 having a screw threaded bore 5 by which the body 4 is attached to the valve 2. A nose 6 projects into the bore 5 to actuate the spindle (not shown) of the valve and enable air under pressure to pass through the bore 5 and subsidiary bores 7 into a closed chamber 8.

One wall of the chamber 8 is provided by a diaphragm 9 which carries a metal conductor 10. The metal conductor 10 and hence the diaphragm 9 is urged in a downward direction, as seen in the drawing, by a compression spring 11 to urge the metal conductor 10 into contact with electrical contacts 12, 12'. The spring 11 is received in a bore 13 of a screw 14 which is mounted in the body 4. Adjustment of the screw 14 enables the force exerted by the spring 11 to be adjusted and hence enables the pressure in the chamber 8 at which the metal conductor 10 will be urged into contact with the electrical contacts 12, 12' to be selected.

As may be seen, the unit shown in Figure 5 is failsafe since air will not be released either by failure of the diaphragm 9 or on removal of the unit.

The pressure sensor shown in Figures 1 and 3 also includes a transmitter unit shown in Figure 6. The transmitter unit comprises a body 15, a pair of spring loaded wires 16, 16' which project into an opening 17, a transmitter 18 for transmitting ultrasonic signals, and a cell 19. The wires 16, 16' are connected to the cell 19 and the transmitter 18 respectively, the cell 19 also being electrically connected to the transmitter 18. In use, the transmitter unit shown in Figure 6 is snapped onto the body 4 shown in Figure 5 with the spring loaded wires 16, 16' contacting exposed extensions of the electrical contacts 12, 12' to form electrical connections therebetween and to retain the transmitter unit on the body 4.

This arrangement is particularly useful since the transmitter unit can be easily removed in order to replace the cell 19 or to adjust the screw 14 and in the case where the valve 2 extends generally radially inwardly there is little danger of separation between the bodies 4 and 15 since centrifugal forces caused by rotation of the tyre 1 urge the body 15 onto the body 4.

In a modified construction shown in Figures 2 and 4, a transmitter unit 20 is mounted on the rim of the tyre 1 in a way similar to that of wheel balance weights. This enables a larger cell 19 or transmitter 18 to be used, to provide a longer life.

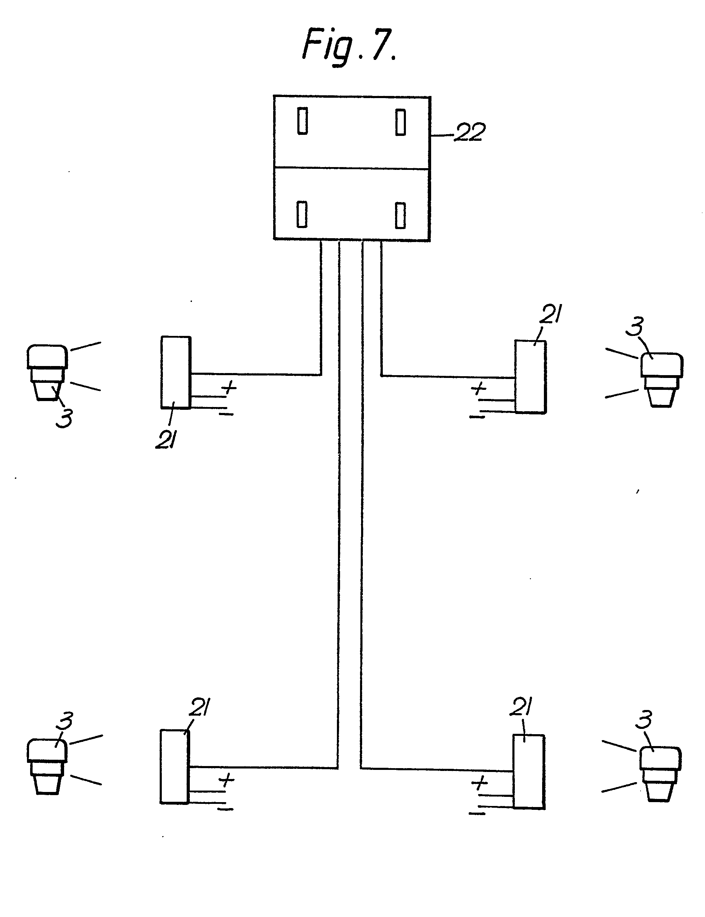

As can be seen in Figures 1 and 2, a receiver 21 is mounted on the chassis of the vehicle in reasonably close proximity to the sensor 3. In general, if the receiver 21 is within three feet of the transmitter 18 then signals of reasonable strength will be received. The receiver 21 is connected to a remote display device 22 (Figure 7) in the vehicle cab which, for example, may display a light on receipt of an ultrasonic signal by the receiver 21. An audible warning may be provided additionally or instead of the visual light.

The pressure sensor is very compact and typically the transmitter 18 may have dimensions of between 12 and 15 mm by 4 mm, while the cell 19 need only supply about 1.5 volts.

In the arrangement shown in Figure 7, four sensors 3 are provided, one for each of four tyres (not shown), each sensor 3 having a corresponding receiver 21 linked to the display device 22. Each receiver 21 is powered by the vehicle electrical system and discrimination between the sensors 3 may be provided, as has previously been mentioned, either by limiting the power of each signal transmitted by the sensors 3, or by using ultrasonic signals of different frequencies.

In use, if the pressure in a tyre decreases then the pressure in the chamber 8 will decrease resulting in the spring 11 forcing the metal conductor 10 into contact with the electrical contacts 12, 12'. This will complete the electrical circuit including the cell 19 and the transmitter 18 resulting in the transmission of an ultrasonic signal. This will be received by the appropriate receiver 21 resulting in the display of a light by the device 22.

CLAIMS

1. A pressure sensor for attachment to a tyre, the pressure sensor comprising sensing means (9) exposed to the pressure of the tyre in use and movable against resilience (11) in response to changes in the tyre pressure; and transmitting means (18) connected to an electrical circuit, the arrangement being such that on movement of the sensing means (9) in excess of a predetermined amount an electrical current is caused to flow in the electrical circuit, the electrical current causing the transmitting means (18) to transmit a signal.

2. A pressure sensor according to claim 1, wherein the sensor comprises a body (4) which can be mounted on the valve (2) of a tyre, the body having means (6) for depressing the valve spindle to enable air under pressure in the tyre to communicate with a chamber (8) within the body, a wall part (9) of the chamber providing the sensing means.

3. A pressure sensor according to claim 1 or claim 2, wherein the sensing means comprises a diaphragm (9) carrying a metal connector (10).

4. A pressure sensor according to claim 3 for sensing a decrease in pressure, wherein the diaphragm (9) is resiliently urged in a direction to cause the metal connector (9) to contact electrical contacts (12, 12') of the electrical circuit.

5. A pressure sensor according to claim 1 or claim 2, further including current generating means, such that movement of the sensing means (9) against resilience in excess of a predetermined amount activates the current generating means to cause a current to flow in the electrical circuit.

6. A pressure sensor according to any of the preceding claims, wherein the resilience is provided by a compression spring (11) the force exerted by which is adjustable.

7. A pressure sensor according to any of the preceding claims, wherein the transmitting means (18) is mounted in a unit which clips onto a body housing the sensing means (9) in such a way that the transmitting means forms part of the electrical circuit.

8. A pressure sensor according to any of the preceding claims, wherein the transmitting means (18) transmits an ultrasonic signal.

9. Pressure monitoring apparatus including a pressure sensor in accordance with any of the preceding claims, the monitoring apparatus including receiving means (21) for receiving the transmitted signal and providing an output signal.

10. A vehicle having a plurality of tyres; pressure monitoring apparatus according to claim 10 including a pressure sensor associated with each tyre; and warning means (22) arranged to receive the output signals and to provide a visual or aural warning signal.

Fig.1.

Fig.2.

Fig.3.

Fig.4.

*Fig.5.*

*Fig.6.*

# Fig.7.